(19) **Europäisches Patentamt / European Patent Office / Office européen des brevets**

(11) **EP 3 376 699 B1**

(12) # EUROPEAN PATENT SPECIFICATION

(45) Date of publication and mention
of the grant of the patent:
**12.08.2020 Bulletin 2020/33**

(51) Int Cl.:
**H04L 5/00** *(2006.01)* **H04W 72/04** *(2009.01)*

(21) Application number: **16861474.1**

(86) International application number:
**PCT/CN2016/103430**

(22) Date of filing: **26.10.2016**

(87) International publication number:
**WO 2017/076206 (11.05.2017 Gazette 2017/19)**

(54) **RESOURCE ALLOCATION METHOD AND APPARATUS**

VERFAHREN UND VORRICHTUNG FÜR RESSOURCENZUWEISUNG

PROCÉDÉ ET APPAREIL D'ATTRIBUTION DE RESSOURCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.11.2015 CN 201510739982**

(43) Date of publication of application:
**19.09.2018 Bulletin 2018/38**

(73) Proprietor: **ZTE Corporation
Shenzhen, Guangdong 518057 (CN)**

(72) Inventors:
• **HAN, Xianghui**
**Shenzhen**
**Guangdong 518057 (CN)**
• **XIA, Shuqiang**
**Shenzhen**
**Guangdong 518057 (CN)**
• **DAI, Bo**
**Shenzhen**
**Guangdong 518057 (CN)**
• **DAI, Qian**
**Shenzhen**
**Guangdong 518057 (CN)**

• **ZHANG, Wen**
**Shenzhen**
**Guangdong 518057 (CN)**
• **SHI, Jing**
**Shenzhen**
**Guangdong 518057 (CN)**

(74) Representative: **Aipex B.V.
World Trade Center Rotterdam / unit 607
Beursplein 37
3011 AA Rotterdam (NL)**

(56) References cited:
**CN-A- 102 123 499      CN-A- 102 223 719
CN-A- 102 754 504      CN-A- 103 081 385
US-A1- 2010 124 197      US-A1- 2012 275 413
US-A1- 2013 286 992      US-A1- 2013 286 992**

• **MOTOROLA: "Editorial corrections to 36.213",
3GPP DRAFT; R1-095127 36.213 CR0255R5
(REL-9, D) EDITORIAL CORRECTIONS, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. Jeju; 20091109, 9
November 2009 (2009-11-09), XP050389440,
[retrieved on 2009-11-13]**

**Description**

**TECHNICAL FIELD**

The present disclosure relates to resource management technologies in a communication system and, in particular, to a resource allocation method and an apparatus.

**BACKGROUND**

In 3rd Generation Partnership Project (3GPP) Long Term Evolution (LTE) and LTE-Advanced (LTE-A) systems, Downlink Control Information (DCI) carries downlink scheduling allocation information, uplink scheduling request information, a series of User Equipment (UE) power control information, etc. The downlink scheduling allocation information and the uplink scheduling request information contain a resource allocation mode for a Physical Downlink Shared Channel (PDSCH) and a resource allocation mode for a Physical Uplink Share Channel (PUSCH) respectively and are indicated by DCI in different formats separately.

In the LTE/LTE-A system, three allocation modes are available for PDSCH resource allocation: type 0, type 1 and type 2. Type 0 is indicated by one of DCI format 1, DCI format 2, DCI format 2A, DCI format 2B, DCI format 2C and DCI format 2D. The scheduling unit in type 0 is a resource block group (RBG). Type 0 supports scheduling of non-contiguous resource blocks (RBs). Type 1 is indicated by one of DCI format 1, DCI format 2, DCI format 2A, DCI format 2B, DCI format 2C and DCI format 2D. In type 1, resources allocated to each UE come from the same RBG subset. Type 1 supports scheduling of non-contiguous RBs. Type 2 is indicated by one of DCI format 1A, DCI format 1B, DCI format 1C and DCI format 1D. In type 2, a resource allocation code is a resource indication value (RIV) containing a starting position and a length of allocated resources. Type 2 supports scheduling of contiguous RBs.

Two allocation modes are available for PUSCH resource allocation: type 0 and type 1, which are indicated by DCI format 0 and DCI format 4 respectively. In type 0, a resource allocation code is an RIV containing a starting position and a length of allocated resources. Type 0 supports scheduling of contiguous RBs. Type 1 supports allocation of non-contiguous RBs from up to two clusters. Each cluster contains one RBG or more contiguous RBGs. In type 1, starting resource indexes and ending resource indexes of the two clusters are jointly coded.

However, currently PDSCH resource allocation and PUSCH resource allocation are independent of each other, thus requiring large resource indication overheads. On the other hand, in the current Carrier Aggregation (CA) technology, resources allocations on different carriers are performed independently of each other, which further decreases the space for resource allocation indication overheads; and, with the advent of 5G emerging services, users may support traditional services, multiple services with ultra-low delays or other emerging services at the same time. Multiple service types can be multiplexed using different frequency domain resources, while existing independent resource allocation modes will lead to excessive indication overheads. Another example can be found in patent document US2013/286992.

SUMMARY

To solve the above problem, embodiments of the present disclosure provide a resource allocation method and an apparatus capable of reducing resource allocation overheads. The invention is defined by the appended claims.

To achieve an object of the present disclosure, embodiments of the present disclosure provide a resource allocation method. The method includes: acquiring, by a resource allocation sending end, resource indication values corresponding to two or more types of resource allocations separately;

jointly coding, by the resource allocation sending end, the acquired resource indication values; and

sending, by the resource allocation sending end, resource indication information obtained through the jointly coding.

In embodiments of the present disclosure, the jointly coding the acquired resource indication values includes: jointly coding, in a preset manner, resource indication values of K types of resource allocations into resource indication information $r_K$ represented by a decimal number.

Here K denotes a number of the types of the resource allocations and K is an integer greater than or equal to 2.

In embodiments of the present disclosure, in a case of $\prod_{i=1}^{k-1} M_i \geq M_k$, the jointly coding the acquired resource indication values $RIV_k$ includes:

if $r_{k-1} \leq M_k - 1$, using a first preset manner $r_k = \left( \prod_{i=1}^{k-1} M_i \right) \cdot r_{k-1} + RIV_k$ where k = 2, 3, ..., K and $r_1 = RIV_1$ when

k = 1, to calculate $r_k$ sequentially until k = K; if $r_{k-1} > M_k$-1, using a second preset manner $r_k = \left( \prod\limits_{i=1}^{k-1} M_i \right) \cdot RIV_k + r_{k-1}$,

where k = 2, 3, ..., K and when k =1, to calculate $r_k$; or

using the second preset manner $r_k = \left( \prod\limits_{i=1}^{k-1} M_i \right) \cdot RIV_k + r_{k-1}$ where k = 2, 3, ..., K and $r_1 = RIV_1$ when k=1, to

calculate $r_k$ sequentially until k = K.

A resource allocation supported by type k has $M_k$ possible modes of allocation; and $RIV_k$ corresponds to one of resource indication values respectively corresponding to the $M_k$ modes of allocation, where $RIV_k$ = 0,1..., $M_k$-1, which is a decimal number.

In embodiments of the present disclosure, in a case of $\prod\limits_{i=1}^{k-1} M_i < M_k$ the jointly coding the acquired resource

indication values $RIV_k$ includes:

if $RIV_k \leq \left( \prod\limits_{i=1}^{k-1} M_i \right) - 1$ using a third preset manner $r_k = M_k \cdot RIV_k + r_{k-1}$, where k = 2, 3,..., K and $r_1 = RIV_1$ when

k =1, to calculate $r_k$ sequentially until k = K; if $RIV_k > \left( \prod\limits_{i=1}^{k-1} M_i \right) - 1$ using a fourth preset manner $r_k = M_k \cdot r_{k-1}$,

where k = 2, 3, ..., K and $r_1 = RIV_1$ when k =1. to calculate $r_k$ ; or
using the fourth preset manner $r_k = M_k \cdot r_{k-1} + RIV_k$, where k = 2, 3, ..., K and $r_1 = RIV_1$ when k =1, to calculate $r_k$ sequentially until k = K.

A resource allocation supported by type k has $M_k$ possible modes of allocation; and $RIV_k$ corresponds to one of resource indication values respectively corresponding to the $M_k$ modes of allocation, where $RIV_k$ = 0,1..., $M_k$-1, which is a decimal number.
In embodiments of the present disclosure, when $M_1$, $M_2$, $M_3$,..., $M_K$ are mutually prime, the jointly coding the acquired resource indication values $RIV_k$ includes:

using a fifth preset manner $r_K = \left( \sum\limits_{k=1}^{K} \left( c_k \cdot RIV_k \right) \right) \mod N$ where $N = \prod\limits_{i=1}^{K} M_i$, $c_k = A_k * A_k'$, $A_k = \dfrac{N}{M_k}$,

and $A_k'$ is a minimum positive integer that satisfies $A_k * A_k' \mod M_k = 1$, to acquire a joint-coded value $r_K$ of the K types of resource allocations.
A resource allocation supported by type k has $M_k$ possible modes of allocation; and $RIV_k$ corresponds to one of resource indication values respectively corresponding to the $M_k$ modes of allocation, where $RIV_k$ = 0,1..., $M_k$-1, which is a decimal number.
In embodiments of the present disclosure, the resource indication information obtained through the jointly coding is converted to a binary number by:
calculating y, which is resource indication information represented by the binary number through y = ((rk + C) mod ($2^Q$-

1))$_{binary}$, where $Q = \left\lceil \log_2 \left( \prod\limits_{i=1}^{K} M_i \right) \right\rceil$ and C is a preset arbitrary integer constant.

Embodiments of the present disclosure further provide a resource allocation method. The method includes: acquiring, by a resource allocation receiving end, a joint-coded value according to received resource indication information; and
acquiring, by the resource allocation receiving end according to the acquired joint-coded value, resource indication values corresponding to resource allocations involved in joint coding separately.
In embodiments of the present disclosure, acquiring a decimal joint-coded value according to the received resource indication information includes:

according to a binary value of resource indication information y from a resource allocation sending end and a preset integer C, calculating a joint-coded value $r_K$ of K types of resource allocations by using the following formula: $r_k = (y)_{decimal}$ $= (2^Q - 1) \cdot n - C$, where n is a minimum integer that makes $r_K$ satisfy $r_K \geq 0$ and $Q = \left\lceil \log_2 \left( \prod_{i=1}^{K} M_i \right) \right\rceil$ .

A resource allocation supported by type k has $M_k$ possible modes of allocation, where k = 2, 3,..., K.

In embodiments of the present disclosure, if a resource allocation sending end of the received resource indication information uses a first preset manner to calculate $r_K$ when $r_{k-1} \leq M_k - 1$ in a case of $\prod_{i=1}^{k-1} M_i \geq M_k$ and if the resource allocation sending end of the received resource indication information uses a third preset manner to calculate $r_K$ when $RIV_k \leq \left( \prod_{i=1}^{k-1} M_i \right) - 1$ in a case of $\prod_{i=1}^{k-1} M_i < M_k$, the acquiring the resource indication values $RIV_k$ corresponding to K types of resource allocations involved in the joint coding includes:

in the case of $\prod_{i=1}^{k-1} M_i \geq M_k$, setting $x_{k-1} = r_k \bmod \prod_{i=1}^{k-1} M_i$,

if $x_{k-1} < M_k$, then $RIV_k = x_{k-1}$ and $r_{k-1} = \left\lfloor \dfrac{r_k}{\prod_{i=1}^{k-1} M_i} \right\rfloor$ otherwise $r_{k-1} = x_{k-1}$ and $RIV_k = \left\lfloor \dfrac{r_k}{\prod_{i=1}^{k-1} M_i} \right\rfloor$ and;

in the case of $\prod_{i=1}^{k-1} M_i < M_k$, setting $x_{k-1} = r_k \bmod M_k$,

if $x_{k-1} < \prod_{i=1}^{k-1} M_i$, then $r_{k-1} = x_{k-1}$ and $RIV_k = \left\lfloor \dfrac{r_k}{M_k} \right\rfloor$ otherwise $RIV_k = x_{k-1}$ and $r_{k-1} = \left\lfloor \dfrac{r_k}{M_k} \right\rfloor$;

where k = K, K- 1, ..., 2.

In embodiments of the present disclosure, if a resource allocation sending end of the received resource indication information uses a second preset manner to calculate $r_K$ in a case of $\prod_{i=1}^{k-1} M_i \geq M_k$ and if the resource allocation sending end of the received resource indication information uses a fourth preset manner to calculate $r_K$ in a case of $\prod_{i=1}^{k-1} M_i < M_k$, the acquiring the resource indication values $RIV_k$ corresponding to K types of resource allocations involved in the joint coding includes:

in the case of $\prod_{i=1}^{k-1} M_i \geq M_k$, $r_{k-1} = r_k \bmod \prod_{i=1}^{k-1} M_i$, $RIV_k = \left\lfloor \dfrac{r_k}{\prod_{i=1}^{k-1} M_i} \right\rfloor$ where $RIV_1 = r_1$; and

in the case of $\prod_{i=1}^{k-1} M_i < M_k$, $r_{k-1} = \left\lfloor \dfrac{r_k}{M_k} \right\rfloor$, $RIV_k = r_k \bmod M_k$, where $RIV_1 = r_1$;

k = K, K-1, ..., 2.

In embodiments of the present disclosure, if a resource allocation sending end of the received resource indication information uses a fifth preset manner to acquire a joint-coded value $r_K$ of K types of resource allocations, the acquiring the resource indication values $RIV_k$ corresponding to the K types of resource allocations involved in the joint coding includes:

sequentially calculating the resource indication values $r_K$ of the K types of resource allocations according to the acquired joint-coded value $r_K$ and a system configuration parameter $M_k$, where $RIV_K = r_K \bmod M_k$ when k = 1, 2, ..., K, respectively.

Embodiments of the present disclosure further provide a resource allocation sending apparatus. The apparatus includes an acquisition module, a joint coding module and a first processing module.

The acquisition module is configured to acquire resource indication values corresponding to two or more types of resource allocations separately.

The joint coding module is configured to jointly code the acquired resource indication values.

The first processing module is configured to send resource indication information obtained through the jointly coding.

In embodiments of the present disclosure, the joint coding module is further configured to jointly code, in a preset manner, the resource indication values of the two or more types of resource allocations into resource indication information $r_K$ represented by a decimal number.

Embodiments of the present disclosure further provide a resource allocation receiving apparatus. The apparatus includes a second processing module and a decoding module.

The second processing module is configured to acquire a joint-coded value according to received resource indication information.

The decoding module is configured to acquire, according to the acquired joint-coded value, resource indication values corresponding to resource allocations involved in joint coding, separately.

In embodiments of the present disclosure, the decoding module is further configured to acquire the resource indication values corresponding to the resource allocations by decoding in a preset manner same as a preset manner of a resource allocation sending end that sends the resource indication information.

Embodiments of the present disclosure further provide a resource allocation apparatus including any resource allocation sending apparatus described above and any resource allocation receiving apparatus described above.

Compared with the related art, the solution of this application includes: acquiring resource indication values corresponding to two or more types of resource allocations separately; jointly coding the acquired resource indication values; and sending joint-coded resource indication information obtained through joint coding. By jointly coding and sending resource indication values of different resource allocations, the solution provided by the present disclosure reduces resource allocation overheads. The solution provided by the present disclosure is applicable but not limited to joint allocation of uplink resources and downlink resources, or joint resource allocation for multiple service types, or joint resource allocation among multiple carriers.

Other features and advantages of the present disclosure will be elaborated hereinafter in the description and, moreover, partially become apparent from the description, or will be understood through implementation of the present disclosure. The object and other advantages of the present disclosure may be achieved and obtained through structures set forth in the description, claims and drawings.

**BRIEF DESCRIPTION OF DRAWINGS**

The accompanying drawings described herein are used to provide a further understanding of the present disclosure, and form a part of the present application. The exemplary embodiments and descriptions thereof in the present disclosure are used to explain the present disclosure and do not limit the present disclosure in an improper way. In the accompanying drawings:

FIG. 1 is a flowchart illustrating an example of a resource allocation method according to an embodiment of the present disclosure;

FIG. 2 is a flowchart illustrating an example of another resource allocation method according to an embodiment of the present disclosure;

FIG. 3 is a schematic diagram illustrating an example of implementing joint coding according to an embodiment of the present disclosure;

FIG. 4 is a schematic diagram illustrating a first example in which allocation of contiguous resources is performed in both downlink and uplink in a resource allocation method according to an embodiment of the present disclosure.

FIG. 5 is a structure diagram of a resource allocation sending apparatus according to an embodiment of the present disclosure; and

FIG. 6 is a structure diagram of a resource allocation receiving apparatus according to an embodiment of the present disclosure.

## DETAILED DESCRIPTION

Objects, solutions and advantages of the present disclosure will be more apparent from a detailed description of embodiments of the present disclosure in conjunction with the accompanying drawings. If not in collision, the embodiments described herein and the features thereof may be combined with each other.

To reduce resource allocation overheads, the present disclosure proposes an implementation mode in which a resource allocation sending end such as a base station or a terminal sends resource allocation information of two or more types of resource allocations to a resource allocation receiving end such as a terminal through the same resource indication information. The two or more types of resource allocations include, but are not limited to, allocation of downlink resources, allocation of uplink resources, allocation of resources for different service types, and the preceding resource allocations on different carriers.

The resource allocation method provided by the present disclosure is used to implement, but is not limited to, joint coding and allocation of PDSCH and PUSCH frequency domain resources allocated to a UE, joint coding and allocation of resources of multiple service types supported by a UE, and joint coding and allocation of resources on multiple carriers of a UE supporting carrier aggregation.

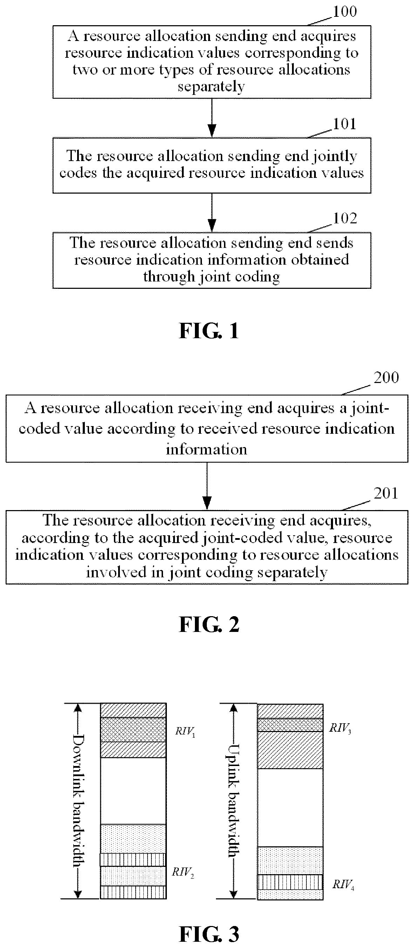

FIG. 1 is a flowchart illustrating an example of a resource allocation method according to an embodiment of the present disclosure. As shown in FIG. 1, the method includes the steps described below.

In step 100, a resource allocation sending end acquires resource indication values corresponding to two or more types of resource allocations separately.

It is assumed that there are K types of resource allocations, where K is an integer greater than or equal to 2.

Assuming that a resource allocation supported by type k has $M_k$ possible modes of allocation, where k=l, 2, 3, ..., K, then $RIV_k$ corresponds to one of resource indication values respectively corresponding to the $M_k$ modes of allocation, where $RIV_k$ = 0,1..., $M_k$-1, which is a decimal number.

How to acquire the resource indication values corresponding to the resource allocations in this step may be implemented in an existing manner, and its specific implementation is not used to limit the scope of the present disclosure and will not be described here.

In step 101, the resource allocation sending end jointly codes the acquired resource indication values.

This step includes jointly coding, in a preset manner, resource indication values of K types of resource allocations into resource indication information $r_k$ represented by a decimal number.

It is to be noted that in the following calculation formulas, when k = 1, $r_1$ = $RIV_1$ is known, so all are calculated from k = 2.

For arbitrary k = 2, 3, ..., K, a method for determining $r_k$ is divided into two cases described below.

In the case of $\displaystyle\prod_{i=1}^{k-1} M_i \geq M_k$ :

if $r_{k-1} \leq M_k$-1, using a first preset manner $r_k = \left(\displaystyle\prod_{i=1}^{k-1} M_i\right) \cdot r_{k-1} + RIV_k$ to calculate $r_k$ sequentially until k = K, where

$r_1$ = $RIV_1$ ; if $r_{k-1}$ > $M_k$-1, using a second preset manner $r_k = \left(\displaystyle\prod_{i=1}^{k-1} M_i\right) \cdot RIV_k + r_{k-1}$ to calculate $r_k$ sequentially

until k = K, where $r_1$ = $RIV_1$; or

using the second preset manner $r_k = \left(\displaystyle\prod_{i=1}^{k-1} M_i\right) \cdot RIV_k + r_{k-1}$ to calculate $r_k$ sequentially until k = K, where $r_1$ = $RIV_1$.

In the case of $\displaystyle\prod_{i=1}^{k-1} M_i < M_k$ :

if $RIV_k \leq \left( \prod\limits_{i=1}^{k-1} M_i \right) - 1$ using a third preset manner $r_k = M_k \cdot RIV_k + r_{k-1}$ to calculate $r_k$ sequentially until k = K,

where $r_1 = RIV_1$; if $RIV_k > \left( \prod\limits_{i=1}^{k-1} M_i \right) - 1$ using a fourth preset manner $r_k = M_k \cdot r_{k-1} + RIV_k$ to calculate $r_k$, where

$r_1 = RIV_1$; or

using the fourth preset manner $r_k = M_k \cdot r_{k-1} + RIV_k$ to calculate $r_k$ sequentially until k = K, where $r_1 = RIV_1$.

Additionally, when $M_1, M_2, M_3, ..., M_K$ are mutually prime, a fifth preset manner $r_K = \left( \sum\limits_{k=1}^{K} \left( c_k \cdot RIV_k \right) \right) \bmod N$

may be used to acquire a joint-coded value $r_K$ of the K types of resource allocations, where $N = \prod\limits_{i=1}^{K} M_i$,

$c_k = A_k * A_k'$, $A_k = \dfrac{N}{M_k}$, and $A_k'$ is a minimum positive integer that satisfies $A_k * A_k' \bmod M_k = 1$.

In step 102, the resource allocation sending end sends the resource indication information obtained through the jointly coding.

In this step, y, which is the resource indication information converted to a binary number, is calculated using the formula y = ((rk+ C)mod($2^Q$-1)) $_{binary}$, where C is a preset arbitrary integer constant.

It is to be noted that due to the introduction of C, any one-to-one mapping can be used between the resource indication information obtained through joint coding and $\prod\limits_{i=1}^{K} M_i$ possible modes of allocation of the K types of resource allocations, and the resource allocation sending end and a resource allocation receiving end use the same mapping table to store this mapping.

FIG. 2 is a flowchart illustrating an example of another resource allocation method according to an embodiment of the present disclosure. As shown in FIG. 2, the method includes the steps described below.

In step 200, a resource allocation receiving end acquires a joint-coded value according to received resource indication information.

This step includes: according to a binary value of resource indication information y from a resource allocation sending end and a preset integer C, calculating the joint-encoded value $r_K$ of K types of resource allocations by using the following formula: $r_k = (y)_{decimal} = (2^Q - 1) \cdot n - C$, where n is a minimum integer that makes $r_K$ satisfy $r_K \geq 0$.

In step 201, the resource allocation receiving end acquires, according to the acquired joint-coded value, resource indication values corresponding to resource allocations involved in joint coding separately.

A manner in which the resource allocation sending end calculates the resource indication information $r_K$ represented by a decimal number may be preset, and the resource allocation receiving end obtains, by decoding in a manner identical to that of the resource allocation sending end, the resource indication values corresponding to the resource allocations.

Specifically, if the resource allocation sending end uses a first preset manner to calculate $r_k$ for the condition

$r_{k-1} \leq M_k$-1 in the case of $\prod\limits_{i=1}^{k-1} M_i \geq M_k$ and if the resource allocation sending end uses a third preset manner to

calculate $r_k$ for the condition $RIV_k \leq \left( \prod\limits_{i=1}^{k-1} M_i \right) - 1$ in the case of $\prod\limits_{i=1}^{k-1} M_i < M_k$ then the resource allocation receiving end acquires resource indication values $RIV_k$ of K types of resource allocations separately as follows.

For arbitrary k = K, K - 1, ..., 2,

in the case of $\prod\limits_{i=1}^{k-1} M_i \geq M_k$,

setting $x_{k-1} = r_k \bmod \prod\limits_{i=1}^{k-1} M_i$,

if $x_{k-1} < M_k$, then $RIV_k = x_{k-1}$ and $r_{k-1} = \left\lfloor \dfrac{r_k}{\prod\limits_{i=1}^{k-1} M_i} \right\rfloor$ otherwise, $r_{k-1} = x_{k-1}$ and $RIV_k = \left\lfloor \dfrac{r_k}{\prod\limits_{i=1}^{k-1} M_i} \right\rfloor$;

in the case of $\prod\limits_{i=1}^{k-1} M_i < M_k$,

setting $x_{k-1} = r_k \bmod M_k$,

if $x_{k-1} < \prod\limits_{i=1}^{k-1} M_i$, then $r_{k-1} = x_{k-1}$ and $RIV_k = \left\lfloor \dfrac{r_k}{M_k} \right\rfloor$ otherwise, $RIV_k = x_{k-1}$ and $r_{k-1} = \left\lfloor \dfrac{r_k}{M_k} \right\rfloor$.

If the resource allocation sending end uses a second preset manner to calculate $r_k$ in the case of $\prod\limits_{i=1}^{k-1} M_i < M_k$

and if the resource allocation sending end uses a fourth preset manner to calculate $r_k$ in the case of $\prod\limits_{i=1}^{k-1} M_i < M_k$,

then the resource allocation receiving end acquires resource indication values $RIV_k$ of K types of resource allocations separately as follows.

For arbitrary k = K, K - 1, ..., 2,

in the case of $\prod\limits_{i=1}^{k-1} M_i \geq M_k$ $r_{k-1} = r_k \bmod \prod\limits_{i=1}^{k-1} M_i$, $RIV_k = \left\lfloor \dfrac{r_k}{\prod\limits_{i=1}^{k-1} M_i} \right\rfloor$ where $RIV_1 = r_1$;

in the case of $\prod\limits_{i=1}^{k-1} M_i < M_k$ $r_{k-1} = \left\lfloor \dfrac{r_k}{M_k} \right\rfloor$, $RIV_k = \bmod\ M_k$, where $RIV_1 = r_1$.

It is not difficult to see that when decoding, the resource allocation receiving end calculates the resource indication values $RIV_k$ in the sequence of k = K, K - 1, ..., 2.

In particular, if the $M_k$ possible allocation modes of the K types of resource allocations have been pre-ordered

and $M_1 \geq M_2 \geq M_3 \geq ... \geq M_K$ (that is, the case of $\prod\limits_{i=1}^{k-1} M_i \geq M_k$ ) is set without loss of generality, then the joint-coded value $r_K$ of the K types of resource allocations can be acquired using the manner in the case of $\prod\limits_{i=1}^{k-1} M_i \geq M_k$.

In the case where the resource allocation sending end uses the fifth preset manner to acquire the joint-coded value $r_K$ of the K types of resource allocations, step 201 includes:
sequentially calculating the resource indication values $RIV_k$ of the K types of resource allocations according to the acquired joint-coded value $r_K$ and a system configuration parameter $M_k$, where $RIV_K = r_K \bmod M_k$ when k = 1, 2, ..., K, respectively.

By jointly coding and sending resource indication values of different resource allocations, the solution provided by the present disclosure reduces resource allocation overheads. On one hand, the solution reduces resource indication overheads required in the current case where PDSCH resource allocation and PUSCH resource allocation are independent of each other. On another hand, the solution is better applicable to the scenario where resource allocations on different carriers are performed independently of each other in the CA technology, which reduces the space for resource allocation indication overheads. Additionally, with the advent of 5G emerging services, for the scenario where users may support traditional services, multiple services with ultra-low delays or other emerging services at the same time and multiple service types can be multiplexed using different frequency domain resources, the solution also provides practical resource allocation that consumes small resource allocation overheads.

Specifically, by using the resource allocation method of the present disclosure, for example, when PDSCH resource allocation and PUSCH resource allocation are performed at the same time, that is, a base station sends a PDSCH and allocates a PUSCH for a UE at the same time, $M_1$ denotes the total number of allocation modes of a downlink resource allocation, $RIV_1$ denotes a resource indication value corresponding to one of the allocation modes of the downlink resource allocation, $M_2$ denotes the total number of allocation modes of an uplink resource allocation, and $RIV_2$ denotes a resource indication value corresponding to one of the allocation modes of the uplink resource allocation. With K set to 2, the downlink resource indication value $RIV_1$ and the uplink resource indication value $RIV_2$ are jointly coded. The resource allocation sending end only needs to send Q-bit resource indication information $((r_k + C)\mod(2^Q - 1))_{binary}$ (where C is a preset arbitrary integer constant). The resource allocation receiving end can obtain the corresponding downlink resource indication value $RIV_1$ and uplink resource indication value $RIV_2$ through the value of $((r_k + C)\mod(2^Q - 1))_{binary}$, thereby obtaining allocated downlink and uplink resources.

For another example, when a UE supports K different service types at the same time and the different service types occupy different resources, resource allocation indication values $RIV_k$ of the different service types can be jointly coded by using the above-mentioned method of the present disclosure. As shown in FIG. 3, if both the uplink and the downlink of the UE support two service types: traditional services and low-delay services, and an uplink PDSCH and a downlink PUSCH coexist, then a total of four types of uplink and downlink resource allocations are jointly coded. In FIG. 3, a shadow formed by a grid of diagonal lines indicates resources allocated for low-delay service, a shadow formed by diagonal lines indicates available resource for low-delay service, a shadow formed by vertical lines indicates resources allocated for traditional service and a shadow formed by points indicates available resources for traditional service. $RIV_k$ where k = 1, $RIV_k$ where k = 2, $RIV_k$ where k = 3 and $RIV_k$ where k = 4 represent resource indication values of the preceding four resource allocations respectively. $RIV_k$ where k = 1, $RIV_k$ where k = 2, $RIV_k$ where k = 3 and $RIV_k$ where k = 4 each represent one of $M_k$ modes of resource allocation.

For a further example, for a UE that supports carrier aggregation, assuming that the number of supported aggregated carriers is Nc and the number of types of resource allocations required on each carrier is Kn, then resource indication values of Nc \*Kn types of resource allocations can be jointly coded using the above resource allocation method of the present disclosure.

The solution provided by the present disclosure is applicable but not limited to joint allocation of uplink resources and downlink resources, or joint resource allocation of multiple service types, or joint resource allocation among multiple carriers.

The solution of the present disclosure will be described below in detail in conjunction with examples.

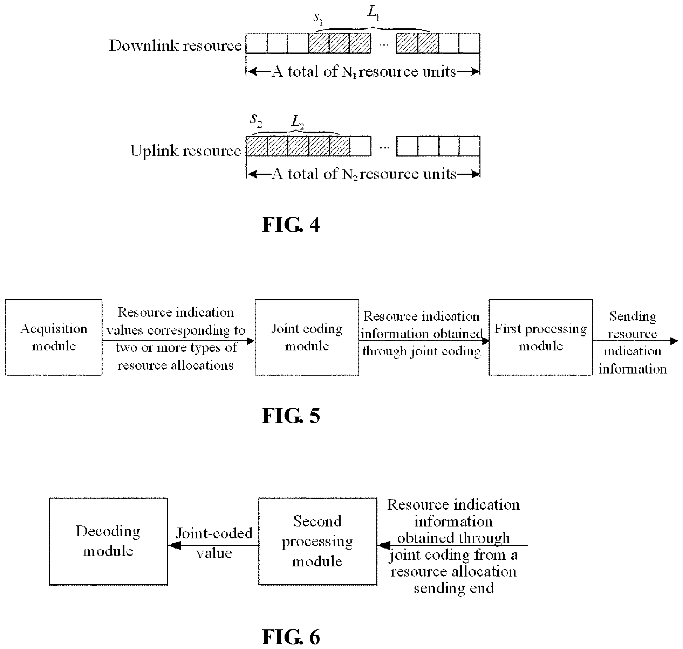

In a first example, it is assumed that the PDSCH and the PUSCH coexist, that is, a base station sends a PDSCH and allocates a PUSCH for a UE at the same time. As shown in FIG. 3, FIG. 3 is a schematic diagram illustrating an example of implementing joint coding according to an embodiment of the present disclosure. It is assumed that in the downlink, the number of available resource units is $N_1$ and resource unit indexes are 0, 1, 2, ..., $N_1$ - 1. It is assumed that in the uplink, the number of available resource units is $N_2$ and resource unit indexes are 0, 1, 2, ..., $N_2$ -1. It is further assumed that contiguous resources are allocated in both the downlink and the uplink, as shown in FIG. 4. In FIG. 4, a starting index and a number of the allocated downlink resources are $S_1$ and $L_1$ respectively and a starting index and a number of the allocated uplink resources are $S_2$ and $L_2$ respectively. The downlink and uplink resource units may be resource blocks or resource block groups or narrowbands.

In this example, the resource indication value of the downlink resource allocation and the resource indication value of the uplink resource allocation are $RIV_1$ and $RIV_2$ respectively. $RIV_1$ and $RIV_2$ may be obtained using the following formulas:

if $(L_i-1) \leq \lfloor N_i /2 \rfloor$, the resource indication value is $RIV_i = N_i (L_i -1) + s_i$, where i = 1, 2; otherwise, $RIV_i = N_i(N_i - L_i + 1) + (N_i - 1 - s_i)$.

According to the solution of FIG. 1, the preceding resource indication values $RIV_1$ and $RIV_2$ may be jointly coded into a decimal number $r_2$. In the first example, it is assumed that $r_2$ is predetermined using the following preset rules:

when $M_1 \geq M_2$ and $RIV_1 \leq M_2$ -1, $r_2 = M_1 \cdot RIV_1 + RIV_2$ ;
when $M_1 \geq M_2$ and $RIV_1 > M_2$ -1, $r_2 = M_1 \cdot RIV_2 + RIV_1$ ;
when $M_1 < M_2$ and $RIV_2 \leq M_1$ -1, $r_2 = M_2 \cdot RIV_2 + RIV_1$ ;
when $M_1 < M_2$ and $RIV_2 > M_1$-1, $r_2 = M_2 \cdot RIV_1 + RIV_2$.

$M_i = \frac{N_i(N_i+1)}{2}$ where i = 1 and $M_i = \frac{N_i(N_i+1)}{2}$ where i = 2 represent the number of all possible allocation results of the downlink and the number of all possible allocation results of the uplink respectively. In this example, assuming that C =0, then y, which is resource indication information converted to a binary number from resource indication information obtained through the jointly coding, is calculated using the formula:

$$y = \left(r_2 \, mod(2^Q - 1)\right)_{binary} = (r_2)_{binary}.$$

Correspondingly, in this example, the receiving end may first obtain $r_2$ according to the received binary resource indication information $y$, and then obtain $RIV_1$ and $RIV_2$ by decoding according to configuration parameters $M_1$ and $M_2$.

If $M_1 \geq M_2$, setting $x=r_2 \bmod M_1$; here, if $x < M_2$, then $RIV_2 = x$ and $RIV_1 = \left\lfloor \dfrac{r_2}{M_1} \right\rfloor$ otherwise, $RIV_1 = x$ and

$$RIV_2 = \left\lfloor \frac{r_2}{M_1} \right\rfloor.$$

If $M_1 < M_2$, setting $x=r_2 \bmod M_2$; here, if $x < M_1$, then $RIV_1 = x$ and $RIV_2 = \left\lfloor \dfrac{r_2}{M_2} \right\rfloor$ otherwise, $RIV_2 = x$ and

$$RIV_1 = \left\lfloor \frac{r_2}{M_2} \right\rfloor.$$

Then the restored $RIV_1$ and $RIV_2$ are used to obtain $S_1$ and $L_1$, which are the starting index and the number of the indexes of allocated downlink resources respectively and $S_2$ and $L_2$, which are the starting index and the number of the indexes of allocated uplink resources respectively. Specifically:

$$\text{for } i=1, 2, \ a_i = \left\lfloor \frac{RIV_i}{N_i} \right\rfloor + 1 \quad b_i = RIV_i \bmod N_i,$$

if $a_i + b_i > N_i$, then $L_i = N_i + 2 - a_i$ and $s_i = N_i - 1 - b_i$; otherwise $L_i = a_i$ and $s_i = b_i$.

Overheads required for allocations of contiguous resources for PDSCH and PUSCH separately by use of the existing LTE are $\lceil log_2 (M_1) \rceil + \lceil log_2 (M_2) \rceil$. Overheads required for allocation of resources by use of the method of the present disclosure are $\lceil log_2 (M_1 M_2) \rceil$. For example, assuming that $N_1 = N_2 = 6$, then overheads required for allocations of contiguous resources for PDSCH and PUSCH separately by use of LTE are 10 bits, and overheads required for allocation of resources by use of the method of the present disclosure are 9 bits.

In a second example, for a UE that supports carrier aggregation, it is assumed that the number of supported aggregated carriers is K where $K \geq 2$, and PDSCH and PUSCH on each carrier still require independent resource allocations. In this example, it is assumed that only PDSCH resource allocations on K carriers are considered, $N_k$ types of downlink resources are available on carrier k, resource unit indexes are 0, 1, 2, ..., $N_k - 1$, and $N_1 \geq N_2 \geq ... \geq N_K$. if allocation of continuous resources is performed on each carrier by using resource allocation type 2 of PDSCH in LTE/LTE-A system, then the number of possible allocation results on each carrier is $M_k = \dfrac{N_k(N_k + 1)}{2}$ and $M_1 \geq M_2 \geq ... \geq M_K$.

The method for calculating the resource indication value $RIV_k$ on carrier k is the same as that in the first example and will not be repeated here.

Resource allocation indication values on the K carriers in this example can be jointly coded into a decimal number $r_K$ and $\displaystyle\prod_{i=1}^{k-1} M_i \geq M_k$. According to the resource allocation method of the present disclosure, for arbitrary k =

2, 3, ..., K, $r_k$ may be determined using $r_k = \left(\displaystyle\prod_{i=1}^{k-1} M_i\right) \cdot RIV_k + r_{k-1}$ where $r_1 = RIV_1$.

In this example, assuming that C = 0, then y, which is resource indication information converted to a binary number from resource indication information obtained through the jointly coding, is calculated using the formula: $y = (r_2 mod(2^Q -1 )) = (r_2)_{binary}$.

Correspondingly, in this example, the receiving end may first obtain $r_K$ according to the received binary resource indication information $y$, and then obtain the resource indication values $RIV_k$ on the K carriers successively by decoding according to system configuration parameters $M_k$. Specifically:

$$\text{for arbitrary k = 2, 3, ..., K, } r_{k-1} = r_k \bmod \prod_{i=1}^{k-1} M_i, \quad RIV_k = \left\lfloor \frac{r_k}{\prod_{i=1}^{k-1} M_i} \right\rfloor \quad \text{where } RIV_1 = r_1.$$

When decoding, the resource allocation receiving end calculates the resource indication values $RIV_k$ in the sequence of k = K, K - 1, ..., 2.

In a third example, assuming that a base station needs to send K types of resource allocations to a UE at the same time, where K = 3, then quantities of possible allocation results of three types of resource allocations are $M_1$ = 3, $M_2$ = 7, $M_3$ = 5. According to the resource allocation method of the present disclosure, the base station can use, for example, a fifth preset manner to obtain a joint-coded value of three types of resource allocations:

$$r_3 = \left( \sum_{k=1}^{3} \left( c_k \cdot RIV_k \right) \right) \bmod N \quad \text{where } N = M_1 \cdot M_2 \cdot M_3 = 105,; \text{ and according to } c_k = A_k * A_k' \text{ and } A_k = \frac{N}{M_k} \text{ here}$$

$A_k'$ is a minimum positive integer that satisfies $A_k * A_k' \bmod M_k = 1$, it can be obtained that $A_1$ = 35, $A_2$ = 15, $A_3$ = 21 and $A_1' = 2$, $A_2' = 1$, $A_3' = 1$, and it can be further obtained that $c_1$ = 70, $c_2$ = 15, $c_3$ = 21 . That is, $r_3$ = (70$RIV_1$ + 15$RIV_2$ + 21$RIV_3$) mod 105.

In this example, assuming that C = 0, then a binary number represented by resource indication information

with $Q = \left\lceil \log_2 \left( \prod_{i=1}^{K} M_i \right) \right\rceil = 7$ bits is y = $(r_3 mod127)_{binary}$ = $(r_3)_{binary}$.

If $RIV_1$ = 2, $RIV_2$ = 4, $RIV_3$ = 1, then y = 0001011.

The resource allocation receiving end can obtain, by decoding, the resource indication values $RIV_k$ of the three types of resource allocations by using the following method:

First, the received resource indication information y is converted to a decimal number, that is, $r_3$ = 11 ; then, for $RIV_k = r_K \bmod M_k$ where k = 1, 2, 3, it can be obtained that $RIV_1$ = 11mod3 = 2, $RIV_2$ = 11mod7 = 4 and $RIV_3$ = 11mod5=1.

FIG. 5 is a structure diagram of a resource allocation sending apparatus according to an embodiment of the present disclosure. As shown in FIG. 5, the apparatus includes an acquisition module, a joint coding module and a first processing module.

The acquisition module is configured to acquire resource indication values corresponding to two or more types of resource allocations separately.

The joint coding module is configured to jointly code the acquired resource indication values.

The first processing module is configured to send resource indication information obtained through the jointly coding.

The joint coding module is specifically configured to jointly code, in a preset manner, the resource indication values of the two or more types of resource allocations into resource indication information $r_K$ represented by a decimal number.

FIG. 6 is a structure diagram of a resource allocation receiving apparatus according to an embodiment of the present disclosure. As shown in FIG. 6, the apparatus includes a second processing module and a decoding module.

The second processing module is configured to acquire a joint-coded value according to received resource indication information.

The decoding module is configured to acquire, according to the acquired joint-coded value, resource indication values corresponding to resource allocations involved in joint coding, separately. Specifically, the resource indication values corresponding to the resource allocations are acquired by decoding in a preset manner same as a preset manner of a resource allocation sending end that sends the resource indication information.

The above are only preferred embodiments of the present disclosure and are not intended to limit the present disclosure.

**Claims**

1. A resource allocation method, comprising:

    acquiring (100), by a resource allocation sending end, resource indication values corresponding to two or more types of resource allocations separately;
    jointly coding (101), by the resource allocation sending end, the acquired resource indication values; and
    sending (102), by the resource allocation sending end, resource indication information obtained through the jointly coding;
    **characterized in that**, wherein the jointly coding (101) of the acquired resource indication values comprises:

    jointly coding, in a preset manner, resource indication values of K types of resource allocations into resource indication information $r_K$ represented by a decimal number,
    wherein K denotes a number of the types of the resource allocations and K is an integer greater than or equal to 2;

    wherein in a case of $\displaystyle\prod_{i=1}^{k-1} M_i \geq M_k$, the jointly coding of the acquired resource indication values $RIV_k$ com-

    prises:

    if $r_{k-1} \leq M_k - 1$, using a first preset manner $r_k = \left(\displaystyle\prod_{i=1}^{k-1} M_i\right) \cdot r_{k-1} + RIV_k$, wherein k = 2, 3, ..., K and $r_1$ =

    $RIV_1$ when k = 1, to calculate $r_k$ sequentially until k = K; if $r_{k-1} > M_k - 1$, using a second preset manner

    $r_k = \left(\displaystyle\prod_{i=1}^{k-1} M_i\right) \cdot RIV_k + r_{k-1}$, wherein k = 2, 3, ..., K and $r_1 = RIV_1$ when k =1, to calculate $r_k$; or

    using the second preset manner $r_k = \left(\displaystyle\prod_{i=1}^{k-1} M_i\right) \cdot RIV_k + r_{k-1}$, wherein k = 2, 3, ..., K and $r_1 = RIV_1$

    when k =1, to calculate $r_k$ sequentially until k = K; or

    wherein in a case of $\displaystyle\prod_{i=1}^{k-1} M_i < M_k$, the jointly coding of the acquired resource indication values $RIV_k$ com-

    prises:

    if $RIV_k \leq \left(\displaystyle\prod_{i=1}^{k-1} M_i\right) - 1$ using a third preset manner $r_k = M_k \cdot RIV_k + r_{k-1}$, wherein k = 2, 3, ..., K and $r_1$

    = $RIV_1$ when k =1, to calculate $r_k$ sequentially until k = K; if $RIV_k > \left(\displaystyle\prod_{i=1}^{k-1} M_i\right) - 1$ using a fourth preset

    manner $r_k = M_k \cdot r_{k-1} + RIV_k$, wherein k = 2, 3, ..., K and $r_1 = RIV_1$ when k =1, to calculate $r_k$; or
    using the fourth preset manner $r_k = M_k \cdot r_{k-1} + RIV_k$, wherein k = 2, 3, ..., K and $r_1 = RIV_1$ when k =1, to calculate $r_k$ sequentially until k = K; or

    wherein when $M_1, M_2, M_3, ..., M_k$ are mutually prime, the jointly coding of the acquired resource indication values $RIV_k$ comprises:

    using a fifth preset manner $r_K = \left(\displaystyle\sum_{k=1}^{K} \left(c_k \cdot RIV_k\right)\right) \mod N$ wherein $N = \displaystyle\prod_{i=1}^{K} M_i$, $c_k = A_k * A_k'$,

$$A_k = \frac{N}{M_k},$$ and $A_k'$ is a minimum positive integer that satisfies $A_k * A_k' \bmod M_k = 1$, to acquire a joint-coded value $r_k$ of the K types of resource allocations;

wherein a resource allocation supported by type k has $M_k$ possible modes of allocation, a resource allocation supported by type i has Mi possible modes of allocation, rk denotes resource indication information obtained through jointly coding resource indication values corresponding to k types of resource allocations, and $RIV_k$ corresponds to one of resource indication values respectively corresponding to the $M_k$ modes of allocation, wherein $RIV_k = 0,1...,M_k$-1, which is a decimal number.

2. The resource allocation method of claim 1, wherein the resource indication information obtained through the jointly coding is converted to a binary number by:

calculating y, which is resource indication information represented by the binary number, through $y = ((r_K + C) \bmod (2^Q - 1))_{binary}$, wherein $Q = \left\lceil \log_2 \left( \prod_{i=1}^{K} M_i \right) \right\rceil$ and C is a preset arbitrary integer constant.

3. A resource allocation method, comprising:

acquiring (200), by a resource allocation receiving end, a decimal joint-coded value according to received resource indication information; and
acquiring (201), by the resource allocation receiving end according to the acquired decimal joint-coded value, resource indication values corresponding to resource allocations involved in joint coding separately;
**characterized in that**, wherein if a resource allocation sending end of the received resource indication information uses a first preset manner to calculate $r_K$ when $r_{k-1} \le M_k$-1 in a case of $\prod_{i=1}^{k-1} M_i \ge M_k$ and if the resource allocation sending end of the received resource indication information uses a third preset manner to calculate

$r_K$ when $RIV_k \le \left( \prod_{i=1}^{k-1} M_i \right) - 1$ in a case of $\prod_{i=1}^{k-1} M_i < M_k$,

the acquiring of the resource indication values $RIV_k$ corresponding to K types of resource allocations involved in the joint coding comprises:

in the case of $\prod_{i=1}^{k-1} M_i \ge M_k$ setting $x_{k-1} = r_k \bmod \prod_{i=1}^{k-1} M_i$,

if $x_{k-1} < M_k$, then $RIV_k = x_{k-1}$ and $r_{k-1} = \left\lfloor \dfrac{r_k}{\prod_{i=1}^{k-1} M_i} \right\rfloor$ otherwise $r_{k-1} = x_{k-1}$ and $RIV_k = \left\lfloor \dfrac{r_k}{\prod_{i=1}^{k-1} M_i} \right\rfloor$ and

in the case of $\prod_{i=1}^{k-1} M_i < M_k$ setting $x_{k-1} = r_k \bmod M_k$,

if $x_{k-1} < \prod_{i=1}^{k-1} M_i$, then $r_{k-1} = x_{k-1}$ and $RIV_k = \left\lfloor \dfrac{r_k}{M_k} \right\rfloor$ otherwise $RIV_k = x_{k-1}$ and

$r_{k-1} = \left\lfloor \dfrac{r_k}{M_k} \right\rfloor$;

wherein k = K, K - 1, ..., 2; or

wherein if a resource allocation sending end of the received resource indication information uses a second preset manner to calculate $r_K$ in a case of $\prod_{i=1}^{k-1} M_i \geq M_k$ and if the resource allocation sending end of the received resource indication information uses a fourth preset manner to calculate $r_K$ in a case of $\prod_{i=1}^{k-1} M_i < M_k$, the acquiring of the resource indication values $RIV_k$ corresponding to K types of resource allocations involved in the joint coding comprises:

in the case of $\prod_{i=1}^{k-1} M_i \geq M_k$, $r_{k-1} = r_k \bmod \prod_{i=1}^{k-1} M_i, RIV_k = \left\lfloor \dfrac{r_k}{\prod_{i=1}^{k-1} M_i} \right\rfloor$ wherein $RIV_1 = r_1$; and

in the case of $\prod_{i=1}^{k-1} M_i < M_k$, $r_{k-1} = \left\lfloor \dfrac{r_k}{M_k} \right\rfloor, RIV_k = r_k \bmod M_k$ wherein $RIV_1 = r_1$; wherein k = K, K - 1, ..., 2; or

wherein if a resource allocation sending end of the received resource indication information uses a fifth preset manner to acquire a joint-coded value $r_K$ of K types of resource allocations,
the acquiring of the resource indication values $RIV_k$ corresponding to the K types of resource allocations involved in the joint coding comprises:

sequentially calculating the resource indication values $r_K$ of the K types of resource allocations according to the acquired joint-coded value $r_K$ and a system configuration parameter $M_k$, wherein $RIV_k = r_K \bmod M_k$ when k = 1, 2, ..., K, respectively;
wherein a resource allocation supported by type k has $M_k$ possible modes of allocation, where k = 2, 3, ..., K, a resource allocation supported by type i has Mi possible modes of allocation, rk denotes resource indication information obtained through jointly coding resource indication values corresponding to k types of resource allocations.

4. The resource allocation method of claim 3, wherein acquiring the decimal joint-coded value according to the received resource indication information comprises:
according to a binary value of resource indication information y from a resource allocation sending end and a preset integer C, calculating a joint-coded value $r_K$ of K types of resource allocations by using the following formula: $r_K =$ $(y)_{decimal}$ $(2^Q - 1) \cdot n - C$, wherein n is a minimum integer that makes $r_K$ satisfy $r_K \geq 0$ and $Q = \left\lceil \log_2 \left( \prod_{i=1}^{K} M_i \right) \right\rceil$.

5. A resource allocation sending apparatus, comprising an acquisition module, a joint coding module and a first processing module, wherein
the acquisition module is configured to acquire resource indication values corresponding to two or more types of resource allocations separately;
the joint coding module is configured to jointly code the acquired resource indication values; and
the first processing module is configured to send resource indication information obtained through the jointly coding;
**characterized in that**, wherein the jointly coding of the acquired resource indication values comprises:

jointly coding, in a preset manner, resource indication values of K types of resource allocations into resource indication information $r_K$ represented by a decimal number,
wherein K denotes a number of the types of the resource allocations and K is an integer greater than or equal to 2;

wherein in a case of $\prod_{i=1}^{k-1} M_i \geq M_k$, the jointly coding of the acquired resource indication values $RIV_k$ comprises:

if $r_{k-1} \leq M_k$-1, using a first preset manner $r_k = \left(\prod_{i=1}^{k-1} M_i\right) \cdot r_{k-1} + RIV_k$, wherein k = 2, 3, ..., K and $r_1 = RIV_1$

when k = 1, to calculate $r_k$ sequentially until k = K; if $r_{k-1} > M_k$-1, using a second preset manner

$$r_k = \left(\prod_{i=1}^{k-1} M_i\right) \cdot RIV_k + r_{k-1}$$, wherein k = 2, 3, ..., K and $r_1 = RIV_1$ when k =1, to calculate $r_k$; or

using the second preset manner $r_k = \left(\prod_{i=1}^{k-1} M_i\right) \cdot RIV_k + r_{k-1}$, wherein k = 2, 3, ..., K and $r_1 = RIV_1$ when k

=1, to calculate $r_k$ sequentially until k = K; or

wherein in a case of $\prod_{i=1}^{k-1} M_i < M_k$, the jointly coding of the acquired resource indication values $RIV_k$ comprises:

if $RIV_k \leq \left(\prod_{i=1}^{k-1} M_i\right) - 1$, using a third preset manner $r_k = M_k \cdot RIV_k + r_{k-1}$, wherein k = 2, 3, ..., K and $r_1 = RIV_1$

when k =1, to calculate $r_k$ sequentially until k = K; if $RIV_k > \left(\prod_{i=1}^{k-1} M_i\right) - 1$, using a fourth preset manner $r_k$

= $M_k \cdot r_{k-1} + RIV_k$, wherein k = 2, 3, ..., K and $r_1 = RIV_1$ when k =1, to calculate $r_k$; or

using the fourth preset manner $r_k = M_k \cdot r_{k-1} + RIV_k$, wherein k = 2, 3, ..., K and $r_1 = RIV_1$ when k =1, to calculate $r_k$ sequentially until k = K; or

wherein when $M_1, M_2, M_3, ..., M_K$ are mutually prime, the jointly coding of the acquired resource indication values $RIV_k$ comprises:

using a fifth preset manner $r_K = \left(\sum_{k=1}^{K}(c_k \cdot RIV_k)\right) \bmod N$, wherein $N = \prod_{i=1}^{K} M_i$, $c_k = A_k * A_k'$,

$A_k = \dfrac{N}{M_k}$, and $A_k'$ is a minimum positive integer that satisfies $A_k * A_k' \bmod M_k = 1$, to acquire a joint-coded value $r_K$ of the K types of resource allocations;

wherein a resource allocation supported by type k has $M_k$ possible modes of allocation, a resource allocation supported by type i has Mi possible modes of allocation, rk denotes resource indication information obtained through jointly coding resource indication values corresponding to k types of resource allocations,

and $RIV_k$ corresponds to one of resource indication values respectively corresponding to the $M_k$ modes of allocation, wherein $RIV_k$ = 0,1...,$M_k$-1, which is a decimal number.

6. A resource allocation receiving apparatus, comprising a second processing module and a decoding module, wherein the second processing module is configured to acquire a decimal joint-coded value according to received resource indication information; and

the decoding module is configured to acquire, according to the acquired decimal joint-coded value, resource indication values corresponding to resource allocations involved in joint coding, separately;

**characterized in that**, wherein if a resource allocation sending end of the received resource indication information uses a first preset manner to calculate $r_K$ when $r_{k-1} \leq M_k$-1 in a case of $\prod\limits_{i=1}^{k-1} M_i \geq M_k$ and if the resource allocation sending end of the received resource indication information uses a third preset manner to calculate $r_K$ when

$RIV_k \leq \left( \prod\limits_{i=1}^{k-1} M_i \right) - 1$ in a case of $\prod\limits_{i=1}^{k-1} M_i < M_k$, the acquiring of the resource indication values $RIV_k$ corresponding to K types of resource allocations involved in the joint coding comprises:

in the case of $\prod\limits_{i=1}^{k-1} M_i \geq M_k$, setting $x_{k-1} = r_k \bmod \prod\limits_{i=1}^{k-1} M_i$,

if $x_{k-1} < M_k$, then $RIV_k = x_{k-1}$ and $r_{k-1} = \left\lfloor \dfrac{r_k}{\prod\limits_{i=1}^{k-1} M_i} \right\rfloor$; otherwise $r_{k-1} = x_{k-1}$ and $RIV_k = \left\lfloor \dfrac{r_k}{\prod\limits_{i=1}^{k-1} M_i} \right\rfloor$; and

in the case of $\prod\limits_{i=1}^{k-1} M_i < M_k$, setting $x_{k-1} = r_k \bmod M_k$,

if $x_{k-1} < \prod\limits_{i=1}^{k-1} M_i$, then $r_{k-1} = x_{k-1}$ and $RIV_k = \left\lfloor \dfrac{r_k}{M_k} \right\rfloor$; otherwise $RIV_k = x_{k-1}$ and $r_{k-1} = \left\lfloor \dfrac{r_k}{M_k} \right\rfloor$; wherein

k = K, K - 1, ..., 2; or

wherein if a resource allocation sending end of the received resource indication information uses a second preset manner to calculate $r_K$ in a case of $\prod\limits_{i=1}^{k-1} M_i \geq M_k$ and if the resource allocation sending end of the received resource indication information uses a fourth preset manner to calculate $r_K$ in a case of

$\prod\limits_{i=1}^{k-1} M_i < M_k$, the acquiring of the resource indication values $RIV_k$ corresponding to K types of resource allocations involved in the joint coding comprises:

in the case of $\prod\limits_{i=1}^{k-1} M_i \geq M_k$, $r_{k-1} = r_k \bmod \prod\limits_{i=1}^{k-1} M_i, RIV_k = \left\lfloor \dfrac{r_k}{\prod\limits_{i=1}^{k-1} M_i} \right\rfloor$ wherein $RIV_1 = r_1$; and

in the case of $\prod\limits_{i=1}^{k-1} M_i < M_k$, $r_{k-1} = \left\lfloor \dfrac{r_k}{M_k} \right\rfloor, RIV_k = r_k \bmod M_k$ wherein $RIV_1 = r_1$; wherein k = K, K - 1, ..., 2; or

wherein if a resource allocation sending end of the received resource indication information uses a fifth preset manner to acquire a joint-coded value $r_K$ of K types of resource allocations,

the acquiring of the resource indication values $RIV_k$ corresponding to the K types of resource allocations involved in the joint coding comprises:

sequentially calculating the resource indication values $r_K$ of the K types of resource allocations according to the acquired joint-coded value $r_K$ and a system configuration parameter $M_k$, wherein $RIV_k = r_K \bmod M_k$ when k = 1, 2, ..., K, respectively;

wherein a resource allocation supported by type k has $M_k$ possible modes of allocation, where k = 2, 3, ..., K, a resource allocation supported by type i has Mi possible modes of allocation, rk denotes resource indication information obtained through jointly coding resource indication values corresponding to k types of resource allocations.

**Patentansprüche**

1. Verfahren für Ressourcenzuweisung, umfassend:

Erfassen (100) von Ressourcenangabewerten, die zwei oder mehr Typen von Ressourcenzuweisungen entsprechen, separat durch ein Ressourcenzuweisungs-Sendeende;
gemeinsames Codieren (101) der erfassten Ressourcenangabewerte durch das Ressourcenzuweisungs-Sendeende; und
Senden (102) von Ressourcenangabeinformationen, die durch das gemeinsame Codieren erlangt wurden, durch das Ressourcenzuweisungs-Sendeende;
**dadurch gekennzeichnet, dass** das gemeinsame Codieren (101) der erfassten Ressourcenangabewerte Folgendes umfasst:

gemeinsames Codieren von Ressourcenangabewerten von K Typen von Ressourcenzuweisungen zu Ressourcenangabeinformationen $r_K$, dargestellt durch eine Dezimalzahl, mit einer vorabfestgelegten Methode, wobei K eine Anzahl der Typen der Ressourcenzuweisungen bezeichnet und K eine Ganzzahl größer als oder gleich 2 ist;

wobei in einem Fall von $\prod_{i=1}^{k-1} M_i \geq M_k$ das gemeinsame Codieren der erfassten Ressourcenangabewerte $RIV_k$ Folgendes umfasst:

wenn $r_{k-1} \leq M_k - 1$, Verwenden einer ersten vorabfestgelegten Methode $r_k = \left( \prod_{i=1}^{k-1} M_i \right) \cdot r_{k-1} + RIV_k$, wobei k=2,3,...,K und $r_1 = RIV_1$, wenn k=1, um $r_k$ sequentiell zu berechnen, bis k=K; wenn $r_{k-1} > M_k - 1$, Verwenden einer zweiten vorabfestgelegten Methode $r_k = \left( \prod_{i=1}^{k-1} M_i \right) \cdot RIV_k + r_{k-1}$, wobei k=2,3,...,K und $r_1 = RIV_1$, wenn k=1, um $r_k$ zu berechnen; oder Verwenden der zweiten vorabfestgelegten Methode $r_k = \left( \prod_{i=1}^{k-1} M_i \right) \cdot RIV_k + r_{k-1}$, wobei k=2,3,...,K und $r_1 = RIV_1$, wenn k=1, um $r_k$ sequentiell zu berechnen, bis k=K; oder

wobei in einem Fall von $\prod_{i=1}^{k-1} M_i < M_k$ das gemeinsame Codieren der erfassten Ressourcenangabewerte $RIV_k$ Folgendes umfasst:

wenn $RIV_k \leq \left( \prod_{i=1}^{k-1} M_i \right) - 1$, Verwenden einer dritten vorabfestgelegten Methode $r_k = M_k \cdot RIV_k + r_{k-1}$, wobei k=2,3,...,K und $r_1 = RIV_1$, wenn k=1, um

$r_k$ sequentiell zu berechnen, bis k=K; wenn $RIV_k > \left(\prod_{i=1}^{k-1} M_i\right) - 1$ , Verwenden einer vierten vorabfestgelegten

Methode $r_k = M_k \cdot r_{k-1} + RIV_k$, wobei k=2,3,...,K und $r_1 = RIV_1$, wenn k=1, um $r_k$ zu berechnen; oder
Verwenden der vierten vorabfestgelegten Methode $r_k = M_k \cdot r_{k-1} + RIV_k$, wobei k=2,3,...,K und $r_1 = RIV_1$, wenn k=1, um $r_k$ sequentiell zu berechnen, bis k=K; oder

wobei, wenn $M_1, M_2, M_3,...,M_k$ wechselseitig unteilbar sind, das gemeinsame Codieren der erfassten Ressourcenangabewerte $RIV_k$ Folgendes umfasst:

Verwenden einer fünften vorabfestgelegten Methode $r_k = \left(\sum_{k=1}^{K} (c_k \cdot RIV_k)\right) \bmod N$ , wobei

$N = \prod_{i=1}^{K} M_i$ , $c_k = A_k * A_k'$ , $A_k = \dfrac{N}{M_k}$ , und $A_k'$ eine minimale positive Ganzzahl ist, die

$A_k * A_k' \bmod M_k = 1$ erfüllt, um einen gemeinsam codierten Wert $r_K$ der K Typen von Ressourcenzuweisungen zu erfassen;
wobei eine durch Typ k unterstützte Ressourcenzuweisung $M_k$ mögliche Zuweisungsmodi aufweist, eine durch Typ i unterstützte Ressourcenzuweisung Mi mögliche Zuweisungsmodi aufweist, rk Ressourcenangabeinformationen bezeichnet, die durch gemeinsames Codieren von Ressourcenangabewerten erlangt werden, die k Typen von Ressourcenzuweisungen entsprechen, und $RIV_k$ einem der Ressourcenangabewerte entspricht, die jeweils den $M_k$ Zuweisungsmodi entsprechen, wobei $RIV_k=0,1...,M_k-1$, was eine Dezimalzahl darstellt.

**2.** Verfahren für Ressourcenzuweisung nach Anspruch 1, wobei die Ressourcenangabeinformationen, die durch das gemeinsame Codieren erlangt werden, durch Folgendes in eine Binärzahl umgewandelt werden:
Berechnen von y, das eine durch die Binärzahl dargestellte Ressourcenangabeinformation ist, durch y= (($r_k$+C)mod

$(2^Q-1))_{binär}$, wobei $Q = \left\lceil \log_2 \left(\prod_{i=1}^{K} M_i\right) \right\rceil$ und C eine vorabfestgelegte willkürliche ganzzahlige Konstante ist.

**3.** Verfahren für Ressourcenzuweisung, umfassend:

Erfassen (200) eines gemeinsam codierten Dezimalwerts durch ein Ressourcenzuweisungs-Emfangsende gemäß empfangenen Ressourcenangabeinformationen; und
Erfassen (201) von Ressourcenangabewerten, die Ressourcenzuweisungen entsprechen, die bei gemeinsamem Codieren involviert sind, separat durch das Ressourcenzuweisungs-Empfangsende gemäß dem erfassten gemeinsam codieren Dezimalwert; **dadurch gekennzeichnet, dass**, wenn ein Ressourcenzuweisungs-Sendeende der empfangenen Ressourcenangabeinformationen eine erste vorabfestgelegte Methode verwendet, um $r_K$ zu berechnen, wenn $r_{k-1} \leq M_k-1$ in einem Fall von $\prod_{i=1}^{k-1} M_i \geq M_k$ und wenn das Ressourcenzuweisungs-Sendeende der empfangenen Ressourcenangabeinformationen eine dritte vorabfestgelegte Methode verwendet, um $r_K$ zu berechnen, wenn $RIV_k \leq \left(\prod_{i=1}^{k-1} M_i\right) - 1$ in einem Fall von $\prod_{i=1}^{k-1} M_i < M_k$ , das Erfassen der Res-

sourcenangabewerte $RIV_k$, die K Typen von Ressourcenzuweisungen entsprechen, die beim gemeinsamen Codieren involviert sind, Folgendes umfasst:

im Falle von $\prod_{i=1}^{k-1} M_i \geq M_k$ , Festlegen von $x_{k-1} = r_k \bmod \prod_{i=1}^{k-1} M_i$ , wenn $x_{k-1} < M_k$, dann $RIV_k = x_{k-1}$ und

$$r_{k-1} = \left\lfloor \frac{r_k}{\prod_{i=1}^{k-1} M_i} \right\rfloor; \quad \text{anderenfalls } r_{k-1} = x_{k-1} \text{ und } RIV_k = \left\lfloor \frac{r_k}{\prod_{i=1}^{k-1} M_i} \right\rfloor \quad ; \text{ und}$$

im Falle von $\prod_{i=1}^{k-1} M_i < M_k$, Festlegen von $x_{k-1} = r_k \bmod M_k$, wenn $x_{k-1} < \prod_{i=1}^{k-1} M_i$, dann $r_{k-1} = x_{k-1}$

und $RIV_k = \left\lfloor \dfrac{r_k}{M_k} \right\rfloor$; anderenfalls $RIV_k = x_{k-1}$;

und $r_{k-1} = \left\lfloor \dfrac{r_k}{M_k} \right\rfloor$

wobei k=K,K-1,...,2; oder

wobei, wenn ein Ressourcenzuweisungs-Sendeende der empfangenen Ressourcenangabeinformationen eine zweite vorabfestgelegte Methode verwendet, um $r_K$ in einem Fall von $\prod_{i=1}^{k-1} M_i \geq M_k$ zu berechnen, und wenn das Ressourcenzuweisungs-Sendeende der empfangenen Ressourcenangabeinformationen eine vierte vorabfestgelegte Methode verwendet, um $r_K$ in einem Fall von $\prod_{i=1}^{k-1} M_i < M_k$ zu berechnen, das Erfassen der Ressourcenangabewerte $RIV_k$, die K Typen von Ressourcenzuweisungen entsprechen, die beim gemeinsamen Codieren involviert sind, Folgendes umfasst: im Falle von $\prod_{i=1}^{k-1} M_i \geq M_k$, $r_{k-1} = r_k \bmod \prod_{i=1}^{k-1} M_i$,

$RIV_k = \left\lfloor \dfrac{r_k}{\prod_{i=1}^{k-1} M_i} \right\rfloor$ wobei $RIV_1 = r_1$; und im Falle von $\prod_{i=1}^{k-1} M_i < M_k$, $r_{k-1} = \left\lfloor \dfrac{r_k}{M_k} \right\rfloor$, $RIV_k = r_k \bmod M_k$, wobei

$RIV_1 = r_1$;

wobei k=K,K-1,...,2; oder

wobei, wenn ein Ressourcenzuweisungs-Sendeende der empfangenen Ressourcenangabeinformationen eine fünfte vorabfestgelegte Methode verwendet, um einen gemeinsam codierten Wert $r_K$ von K Typen von Ressourcenzuweisungen zu erfassen,

das Erfassen der Ressourcenangabewerte $RIV_k$, die den K Typen von Ressourcenzuweisungen entsprechen, die beim gemeinsamen Codieren involviert sind, Folgendes umfasst:

sequentielles Berechnen der Ressourcenangabewerte $r_K$ der K Typen von Ressourcenzuweisungen gemäß dem erfassten gemeinsam codierten Wert $r_K$ bzw. einem Systemkonfigurationsparameter $M_k$, wobei $RIV_k = r_K \bmod M_k$, wenn k=1,2,...,K;

wobei eine durch Typ k unterstützte Ressourcenzuweisung $M_k$ mögliche Zuweisungsmodi aufweist, wenn k=2,3,...,K, eine durch Typ i unterstützte Ressourcenzuweisung Mi mögliche Zuweisungsmodi aufweist, rk Ressourcenangabeinformationen bezeichnet, die durch gemeinsames Codieren von Ressourcenangabewerten erlangt werden, die k Typen von Ressourcenzuweisungen entsprechen.

4. Verfahren für Ressourcenzuweisung nach Anspruch 3, wobei das Erfassen des gemeinsam codierten Dezimalwerts gemäß den empfangenen Ressourcenangabeinformationen Folgendes umfasst:
gemäß einem Binärwert von Ressourcenangabeinformationen y von einem Ressourcenzuweisungs-Sendeende und einer vorabfestgelegten Ganzzahl C, Berechnen eines gemeinsam codierten Werts $r_K$ von K Typen von Ressourcenzuweisungen durch Verwenden der folgenden Formel:

$r_K = (y)_{dezimal} = (2^Q-1) \cdot n-C$, wobei n eine minimale Ganzzahl ist, die dazu führt, dass $r_K$ $r_K \geq 0$ und

$$Q = \left\lceil \log_2 \left( \prod_{i=1}^{K} M_i \right) \right\rceil$$ erfüllt.

5. Sendevorrichtung für Ressourcenzuweisung, umfassend ein Erfassungsmodul, ein Modul für gemeinsames Codieren und ein erstes Verarbeitungsmodul, wobei

das Erfassungsmodul dazu konfiguriert ist, Ressourcenangabewerte, die zwei oder mehr Typen von Ressourcenzuweisungen entsprechen, separat zu erfassen;

das Modul für gemeinsames Codieren dazu konfiguriert ist, die erfassten Ressourcenangabewerte gemeinsam zu codieren; und

das erste Verarbeitungsmodul dazu konfiguriert ist, Ressourcenangabeinformationen, die durch das gemeinsame Codieren erlangt wurden, zu senden;

**dadurch gekennzeichnet, dass** das gemeinsame Codieren der erfassten Ressourcenangabewerte Folgendes umfasst:

gemeinsames Codieren von Ressourcenangabewerten von K Typen von Ressourcenzuweisungen zu Ressourcenangabeinformationen $r_K$,
dargestellt durch eine Dezimalzahl, mit einer vorabfestgelegten Methode,
wobei K eine Anzahl der Typen der Ressourcenzuweisungen bezeichnet und K eine Ganzzahl größer als oder gleich 2 ist;

wobei in einem Fall von $\prod_{i=1}^{k-1} M_i \geq M_k$ das gemeinsame Codieren der erfassten Ressourcenangabewerte $RIV_k$

Folgendes umfasst:

wenn $r_{k-1} \leq M_k-1$, Verwenden einer ersten vorabfestgelegten Methode $r_k = \left( \prod_{i=1}^{k-1} M_i \right) \cdot r_{k-1} + RIV_k$ wobei k=2,3,...,K und $r_1=RIV_1$, wenn k=1, um $r_k$ sequentiell zu berechnen, bis k=K; wenn $r_{k-1}>M_k-1$, Verwenden

einer zweiten vorabfestgelegten Methode $r_k = \left( \prod_{i=1}^{k-1} M_i \right) \cdot RIV_k + r_{k-1}$ wobei k=2,3,...,K und $r_1=RIV_1$,

wenn k=1, um $r_k$ zu berechnen; oder Verwenden der zweiten vorabfestgelegten Methode

$r_k = \left( \prod_{i=1}^{k-1} M_i \right) \cdot RIV_k + r_{k-1}$ wobei k=2,3,...,K und $r_1=RIV_1$, wenn k=1, um $r_k$ sequentiell zu berechnen, bis k=K; oder

wobei in einem Fall von $\prod_{i=1}^{k-1} M_i < M_k$ das gemeinsame Codieren der erfassten Ressourcenangabewerte

$RIV_k$ Folgendes umfasst:

wenn $RIV_k \leq \left( \prod_{i=1}^{k-1} M_i \right) -1$ Verwenden einer dritten vorabfestgelegten Methode $r_k=M_k \cdot RIV_k+r_{k-1}$, wobei k=2,3,...,K und $r_1=RIV_1$, wenn k=1, um

$r_k$ sequentiell zu berechnen, bis k=K; wenn $RIV_k > \left( \prod_{i=1}^{k-1} M_i \right) -1$ Verwenden einer vierten vorabfest-

gelegten Methode $r_k=M_k \cdot r_{k-1}+RIV_k$, wobei k=2,3,...,K und $r_1=RIV_1$, wenn k=1, um $r_k$ zu berechnen; oder Verwenden der vierten vorabfestgelegten Methode $r_k=M_k \cdot r_{k-1}+RIV_k$, wobei k=2,3,...,K und $r_1=RIV_1$, wenn k=1, um $r_k$ sequentiell zu berechnen, bis k=K; oder

wobei, wenn $M_1, M_2, M_3,...,M_K$ wechselseitig unteilbar sind, das gemeinsame Codieren der erfassten Ressourcenangabewerte $RIV_k$ Folgendes umfasst:

Verwenden einer fünften vorabfestgelegten Methode $r_K = \left( \sum\limits_{k=1}^{K} (c_k \cdot RIV_k) \right) \bmod N$, wobei

$N = \prod\limits_{i=1}^{K} M_i$, $c_k = A_k * A_k'$, $A_k = \dfrac{N}{M_k}$, und $A_k'$ eine minimale positive Ganzzahl ist, die

$A_k * A_k' \bmod M_k = 1$ erfüllt, um einen gemeinsam codierten Wert $r_K$ der K Typen von Ressourcenzuweisungen zu erfassen;

wobei eine durch Typ k unterstützte Ressourcenzuweisung $M_k$ mögliche Zuweisungsmodi aufweist, eine durch Typ i unterstützte Ressourcenzuweisung Mi mögliche Zuweisungsmodi aufweist, rk Ressourcenangabeinformationen bezeichnet, die durch gemeinsames Codieren von Ressourcenangabewerten erlangt werden, die k Typen von Ressourcenzuweisungen entsprechen, und $RIV_k$ einem der Ressourcenangabewerte entspricht, die jeweils den $M_k$ Zuweisungsmodi entsprechen, wobei $RIV_k=0,1...,M_k-1$, was eine Dezimalzahl darstellt.

6. Empfangsvorrichtung für Ressourcenzuweisung, umfassend ein zweites Verarbeitungsmodul und ein Decodiermodul, wobei das zweite Verarbeitungsmodul dazu konfiguriert ist, einen gemeinsam codierten Dezimalwert gemäß empfangenen Ressourcenangabeinformationen zu erfassen; und

das Decodiermodul dazu konfiguriert ist, gemäß dem erfassten gemeinsam codierten Dezimalwert Ressourcenangabewerte, die Ressourcenzuweisungen entsprechen, die beim gemeinsamen Codieren involviert sind, separat zu erfassen;

**dadurch gekennzeichnet, dass**, wenn ein Ressourcenzuweisungs-Sendeende der empfangenen Ressourcenangabeinformationen eine erste vorabfestgelegte Methode verwendet, um $r_K$ zu berechnen,

wenn $r_{k-1} \leq M_k-1$ in einem Fall von $\prod\limits_{i=1}^{k-1} M_i \geq M_k$ und wenn das Ressourcenzuweisungs-Sendeende der empfangenen Ressourcenangabeinformationen eine dritte vorabfestgelegte

Methode verwendet, um $r_K$ zu berechnen, wenn $RIV_k \leq \left( \prod\limits_{i=1}^{k-1} M_i \right) -1$ in einem Fall von $\prod\limits_{i=1}^{k-1} M_i < M_k$ das Erfassen

der Ressourcenangabewerte $RIV_k$, die K Typen von Ressourcenzuweisungen entsprechen, die beim gemeinsamen Codieren involviert sind, Folgendes umfasst:

im Falle von $\prod\limits_{i=1}^{k-1} M_i \geq M_k$ Festlegen von $x_{k-1} = r_k' \bmod \prod\limits_{i=1}^{k-1} M_i$ wenn $x_{k-1} < M_k$, dann $RIV_k = x_{k-1}$

und $r_{k-1} = \left\lfloor \dfrac{r_k'}{\prod\limits_{i=1}^{k-1} M_i} \right\rfloor$ anderenfalls $r_{k-1} = x_{k-1}$ und $RIV_k = \left\lfloor \dfrac{r_k'}{\prod\limits_{i=1}^{k-1} M_i} \right\rfloor$ und

im Falle von $\prod_{i=1}^{k-1} M_i < M_k$, Festlegen von $x_{k-1} = r_k \bmod M_k$, wenn $x_{k-1} < \prod_{i=1}^{k-1} M_i$, dann $r_{k-1} = x_{k-1}$ und

$RIV_k = \left\lfloor \dfrac{r_k}{M_k} \right\rfloor$; anderenfalls $RIV_k = x_{k-1}$ und $r_{k-1} = \left\lfloor \dfrac{r_k}{M_k} \right\rfloor$;

wobei k=K,K-1,...,2; oder

wobei, wenn ein Ressourcenzuweisungs-Sendeende der empfangenen Ressourcenangabeinformationen eine zweite vorabfestgelegte Methode verwendet, um $r_K$ in einem Fall von $\prod_{i=1}^{k-1} M_i \geq M_k$ zu berechnen, und wenn das Ressourcenzuweisungs-Sendeende der empfangenen Ressourcenangabeinformationen eine vierte vorabfestgelegte Methode verwendet, um $r_K$ in einem Fall von $\prod_{i=1}^{k-1} M_i < M_k$ zu berechnen, das Erfassen der Ressourcenangabewerte $RIV_k$, die K Typen von Ressourcenzuweisungen entsprechen, die beim gemeinsamen Codieren involviert sind, Folgendes umfasst:

im Falle von $\prod_{i=1}^{k-1} M_i \geq M_k$, $r_{k-1} = r_k \bmod \prod_{i=1}^{k-1} M_i, RIV_k = \left\lfloor \dfrac{r_k}{\prod_{i=1}^{k-1} M_i} \right\rfloor$, wobei $RIV_1 = r_1$; und

im Falle von $\prod_{i=1}^{k-1} M_i < M_k$, $r_{k-1} = \left\lfloor \dfrac{r_k}{M_k} \right\rfloor, RIV_k = r_k \bmod M_k$ wobei RIV$_1$=$r_1$; wobei k=K, K-1 ,..., 2; oder

wobei, wenn ein Ressourcenzuweisungs-Sendeende der empfangenen Ressourcenangabeinformationen eine fünfte vorabfestgelegte Methode verwendet, um einen gemeinsam codierten Wert $r_K$ von K Typen von Ressourcenzuweisungen zu erfassen, das Erfassen der Ressourcenangabewerte $RIV_k$, die den K Typen von Ressourcenzuweisungen entsprechen, die beim gemeinsamen Codieren involviert sind, Folgendes umfasst:

sequentielles Berechnen der Ressourcenangabewerte $r_K$ der K Typen von Ressourcenzuweisungen gemäß dem erfassten gemeinsam codierten Wert $r_K$ bzw. einem Systemkonfigurationsparameter $M_k$, wobei $RIV_k = r_K \bmod M_k$, wenn k=1,2,..., K; wobei eine durch Typ k unterstützte Ressourcenzuweisung $M_k$ mögliche Zuweisungsmodi aufweist, wenn k=2,3,...,K, eine durch Typ i unterstützte Ressourcenzuweisung Mi mögliche Zuweisungsmodi aufweist, rk Ressourcenangabeinformationen bezeichnet, die durch gemeinsames Codieren von Ressourcenangabewerten erlangt werden, die k Typen von Ressourcenzuweisungen entsprechen.

## Revendications

1. Procédé d'attribution de ressources, comprenant :

l'acquisition (100), par une extrémité d'envoi d'attribution de ressources, des valeurs d'indication de ressources correspondant à deux types d'attributions de ressources ou plus séparément ;
le codage conjoint (101), par l'extrémité d'envoi d'attribution de ressources, des valeurs d'indication de ressources acquises ; et
l'envoi (102), par l'extrémité d'envoi d'attribution de ressources, des informations d'indication de ressources obtenues par le codage conjoint ;
**caractérisé en ce que**, dans lequel le codage conjoint (101) des valeurs d'indication de ressources acquises comprend :

le codage conjoint, d'une manière prédéfinie, des valeurs d'indication de ressources des K types d'attributions de ressources en informations d'indication de ressources $r_k$ représentées par un nombre décimal, dans lequel K désigne un certain nombre de types d'attributions de ressources et K est un nombre entier supérieur ou égal à 2 ;

dans lequel, en cas de $\prod_{i=1}^{k-1} M_i \geq M_k$, le codage conjoint des valeurs d'indication de ressources acquises $RIV_k$ comprend :

si $r_{k-1} \leq M_k-1$, l'utilisation d'une première manière prédéfinie $r_k = \left( \prod_{i=1}^{k-1} M_i \right) \cdot r_{k-1} + RIV_k$ dans lequel k = 2, 3,..., K et $r_1=RIV_1$, lorsque k = 1, pour calculer $r_k$ séquentiellement jusqu'à k = K,

si $r_{k-1} > M_k-1$, l'utilisation d'une deuxième manière prédéfinie $r_k = \left( \prod_{i=1}^{k-1} M_i \right) \cdot RIV_k + r_{k-1}$ dans lequel k = 2, 3,..., K et $r_1=RIV_1$ lorsque k = 1, pour calculer $r_k$ ; ou

l'utilisation de la deuxième manière prédéfinie $r_k = \left( \prod_{i=1}^{k-1} M_i \right) \cdot RIV_k + r_{k-1}$ dans lequel k = 2, 3,..., K et $r_1=RIV_1$ lorsque k = 1, pour calculer $r_k$ séquentiellement jusqu'à k=K ; ou

dans lequel, en cas de $\prod_{i=1}^{k-1} M_i < M_k$, le codage conjoint des valeurs d'indication de ressources acquises $RIV_k$ comprend :

si $RIV_k \leq \left( \prod_{i=1}^{k-1} M_i \right) - 1$ l'utilisation d'une troisième manière prédéfinie $r_k = M_k \cdot RIV_k + r_{k-1}$, dans lequel k = 2, 3,..., K et $r_1 = RIV_1$ lorsque k = 1, pour calculer $r_k$ séquentiellement jusqu'à k = K ;

si $RIV_k > \left( \prod_{i=1}^{k-1} M_i \right) - 1$ l'utilisation d'une quatrième manière prédéfinie, $r_k = M_k \cdot r_{k-1} + RIV_k$, dans lequel k = 2, 3,..., K et $r_1=RIV_1$ lorsque k = 1, pour calculer $r_k$ ; ou

l'utilisation de la quatrième manière prédéfinie, $r_k = M_k \cdot r_{k-1} + RIV_k$, dans lequel k = 2, 3,..., K et $r_1 = RIV_1$ lorsque k = 1, pour calculer $r_k$ séquentiellement jusqu'à k = K ; ou

dans lequel lorsque $M_1, M_2, M_3,...,M_k$ sont mutuellement premiers, le codage conjoint des valeurs d'indication de ressources acquises $RIV_k$ comprend :

l'utilisation d'une cinquième manière prédéfinie $r_k = \left( \sum_{k=1}^{K} (c_k \cdot RIV_k) \right) \mod N$ dans lequel $N = \prod_{i=1}^{K} M_i$,

$c_k = A_k * A_k'$, $A_k = \frac{N}{M_k}$ et $A_k'$ est un nombre entier positif minimum qui satisfait $A_k * A_k' \mod M_k = 1$ pour acquérir une valeur codée conjointe $r_k$ des K types d'attributions de ressources ;

dans lequel une attribution de ressources soutenue par le type k possède $M_k$ modes d'attribution possibles, une attribution de ressources soutenue par le type i possède $M_i$ modes d'attribution possibles, $r_k$ désigne des informations d'indication de ressources obtenues par le codage conjoint des valeurs d'indication de ressources correspondant aux K types d'attributions de ressources, et $RIV_k$ correspond à une des valeurs d'indication de ressources correspondant respectivement aux $M_k$ modes d'attribution, dans lequel $RIV_k = 0,1 \ldots, M_k\text{-}l$, qui est un nombre décimal.

2. Procédé d'attribution de ressources selon la revendication 1, dans lequel les informations d'indication de ressources obtenues par le codage conjoint sont converties en un nombre binaire par :
le calcul de y, qui représente des informations d'indication de ressources représentées par le nombre binaire, par

$y = ((r_k + C) \bmod (2^Q\text{-}1))_{binary}$, dans lequel $Q = \left\lceil \log_2 \left( \prod_{i=1}^{K} M_i \right) \right\rceil$ et C est une constante entière arbitraire prédéfinie.

3. Procédé d'attribution de ressources, comprenant :

l'acquisition (200), par une extrémité de réception d'attribution de ressources, d'une valeur codée conjointe décimale en fonction des informations d'indication de ressources reçues ; et
l'acquisition (201), par l'extrémité de réception d'attribution de ressources en fonction de la valeur codée conjointe décimale acquise, des valeurs d'indication de ressources correspondant à des attributions de ressources impliquées dans le codage conjoint séparément ;
**caractérisé en ce que**, dans lequel si une extrémité d'envoi d'attribution de ressources des informations d'indication de ressources reçues utilise une première manière prédéfinie pour calculer $r_k$ lorsque $r_{k\text{-}1} \leq M_k\text{-}1$ en cas

de $\prod_{i=1}^{k-1} M_i \geq M_k$ et si l'extrémité d'envoi d'attribution de ressources des informations d'indication de ressources reçues utilise une troisième manière prédéfinie pour calculer $r_k$ lorsque $RIV_k \leq \left( \prod_{i=1}^{k-1} M_i \right) - 1$ en cas de $\prod_{i=1}^{k-1} M_i < M_k$ l'acquisition des valeurs d'indication de ressources $RIV_k$, correspondant aux K types d'attributions de ressources impliqués dans le codage conjoint, comprend :

en cas de $\prod_{i=1}^{k-1} M_i \geq M_k$ l'établissement de $x_{k-1} = r_k \bmod \prod_{i=1}^{k-1} M_i$ si $x_{k-1} < M_k$, alors $RIV_k = x_{k-1}$ et

$r_{k-1} = \left\lfloor \dfrac{r_k}{\prod_{i=1}^{k-1} M_i} \right\rfloor$ sinon $r_{k-1} = x_{k-1}$ et $RIV_k = \left\lfloor \dfrac{r_k}{\prod_{i=1}^{k-1} M_i} \right\rfloor$ et en cas de $\prod_{i=1}^{k-1} M_i < M_k$ l'établissement de

$x_{k-1} = r_k \bmod M_k$, si $x_{k-1} < \prod_{i=1}^{k-1} M_i$ alors $r_{k-1} = x_{k-1}$ et $RIV_k = \left\lfloor \dfrac{r_k}{M_k} \right\rfloor$ sinon $RIV_k = x_{k-1}$ et $r_{k-1} = \left\lfloor \dfrac{r_k}{M_k} \right\rfloor$ ;

dans lequel k = K, K-1, ..., 2 ; ou
dans lequel si une extrémité d'envoi d'attribution de ressources des informations d'indication de ressources reçues utilise une deuxième manière prédéfinie pour calculer $r_k$ en cas de $\prod_{i=1}^{k-1} M_i \geq M_k$ et si l'extrémité d'envoi d'attribution de ressources des informations d'indication de ressources reçues utilise une quatrième manière prédéfinie pour calculer $r_k$ en cas de $\prod_{i=1}^{k-1} M_i < M_k$ , l'acquisition des valeurs d'indication de ressources $RIV_k$

correspondant aux K types d'attributions de ressources impliqués dans le codage conjoint comprend :

en cas de $\prod_{i=1}^{k-1} M_i \geq M_k$ $r_{k-1} = r_k \bmod \prod_{i=1}^{k-1} M_i$, $RIV_k = \left\lfloor \dfrac{r_k}{\prod_{i=1}^{k-1} M_i} \right\rfloor$ dans lequel $RIV_1 = r_1$ ; et

en cas de $\prod_{i=1}^{k-1} M_i < M_k$, $r_{k-1} = \left\lfloor \dfrac{r_k}{M_k} \right\rfloor$, $RIV_k = r_k \bmod M_k$, dans lequel $RIV_1 = r_1$ ;

dans lequel k = K, K-1, ..., 2 ; ou

dans lequel si une extrémité d'envoi d'attribution de ressources des informations d'indication de ressources reçues utilise une cinquième manière prédéfinie pour acquérir une valeur codée conjointe $r_k$ des K types d'attributions de ressources,

l'acquisition des valeurs d'indication de ressources $RIV_k$ correspondant aux K types d'attributions de ressources impliqués dans le codage conjoint comprend :

le calcul séquentiel des valeurs d'indication de ressources $r_k$ des K types d'attributions de ressources en fonction de la valeur codée conjointe acquise $r_k$ et d'un paramètre de configuration de système $M_k$, dans lequel $RIV_k = r_k \bmod M_k$ lorsque k = 1, 2, ..., K, respectivement ;

dans lequel une attribution de ressources soutenue par le type k possède $M_k$ modes d'attribution possibles, où k = 2, 3, ..., K, une attribution de ressources soutenue par le type i possède $M_i$ modes d'attribution possibles, rk désigne les informations d'indication de ressources obtenues par codage conjoint des valeurs d'indication de ressources correspondant aux K types d'attributions de ressources.

4. Procédé d'attribution de ressources selon la revendication 3, dans lequel l'acquisition de la valeur codée conjointe décimale en fonction des informations d'indication de ressources reçues comprend :

en fonction d'une valeur binaire des informations d'indication de ressources y à partir d'une extrémité d'envoi d'attribution de ressources et d'un nombre entier prédéfini C, le calcul d'une valeur codée conjointe $r_k$ des K types d'attributions de ressources en utilisant la formule suivante :

$r_k = (y)_{decimal} = (2^Q - 1) \cdot n - C$, dans lequel n est un nombre entier minimum qui rend $r_k$ satisfait $r_K \geq 0$ et

$$Q = \left\lceil \log_2 \left( \prod_{i=1}^{K} M_i \right) \right\rceil .$$

5. Appareil d'envoi d'attribution de ressources, comprenant un module d'acquisition, un module de codage conjoint et un premier module de traitement, dans lequel

le module d'acquisition est configuré pour acquérir séparément des valeurs d'indication de ressources correspondant à deux types d'attributions de ressources ou plus ;

le module de codage conjoint est configuré pour coder conjointement les valeurs d'indication de ressources acquises ; et

le premier module de traitement est configuré pour envoyer des informations d'indication de ressources par le codage conjoint ; **caractérisé en ce que**, dans lequel le codage conjoint des valeurs d'indication de ressources acquises comprend :

le codage conjoint, d'une manière prédéfinie, des valeurs d'indication de ressources des K types d'attributions de ressources en informations d'indication de ressources $r_k$ représentée par un nombre décimal,

dans lequel K désigne un certain nombre de types d'attributions de ressources et K est un nombre entier supérieur ou égal à 2 ;

dans lequel en cas de $\prod_{i=1}^{k-1} M_i \geq M_k$, le codage conjoint des valeurs d'indication de ressources acquises $RIV_k$, comprend :

si $r_{k-1} \leq M_k - 1$, l'utilisation d'une première manière prédéfinie $r_k = \left( \prod_{i=1}^{k-1} M_i \right) \cdot r_{k-1} + RIV_k'$ dans lequel k = 2, 3, ..., K et $r_1 = RIV_1$ lorsque k = 1, pour calculer $r_k$ séquentiellement jusqu'à k = K ; si $r_{k-1} \leq M_k - 1$, l'utilisation

d'une deuxième manière prédéfinie $r_k = \left(\prod_{i=1}^{k-1} M_i\right) \cdot RIV_k + r_{k-1}$ dans lequel k = 2, 3, .... K et

$r_1=RIV_1$ lorsque k = 1, pour calculer $r_k$ ; ou

l'utilisation d'une deuxième manière prédéfinie $r_k = \left(\prod_{i=1}^{k-1} M_i\right) \cdot RIV_k + r_{k-1}$ dans lequel k = 2, 3,..., K

et $r_1=RIV_1$ lorsque k = 1, pour calculer $r_k$ séquentiellement jusqu'à k = K ; ou

dans lequel, en cas de $\prod_{i=1}^{k-1} M_i < M_k$ le codage conjoint des valeurs d'indication de ressources acquises

$RIV_k$, comprend :

si $RIV_k \leq \left(\prod_{i=1}^{k-1} M_i\right) - 1$ l'utilisation d'une troisième manière prédéfinie $r_k = M_k \cdot RIV_k + r_{k-1}$, dans lequel k = 2 3,..., K et $r_1=RIV_1$ lorsque k = 1, pour calculer $r_k$ séquentiellement jusqu'à k = K ;

si $RIV_k > \left(\prod_{i=1}^{k-1} M_i\right) - 1$ l'utilisation d'une quatrième manière prédéfinie $r_k=M_k \cdot r_{k-1}+RIV_k$, dans lequel k = 2 3,..., K et $r_1=RIV_1$ lorsque k = 1, pour calculer $r_k$ ; ou

l'utilisation de la quatrième manière prédéfinie $r_k = M_k \cdot r_{k-1}+RIV_k$, dans lequel k = 2 3,..., K et $r_1=RIV_1$ lorsque k = 1, pour calculer $r_k$ séquentiellement jusqu'à k = K ; ou

dans lequel lorsque $M_1, M_2, M_2,..., M_K$ sont mutuellement premiers, le codage conjoint des valeurs d'indication de ressources acquises $RIV_k$ comprend :

l'utilisation d'une cinquième manière prédéfinie $r_K = \left(\sum_{k=1}^{K} (c_k \cdot RIV_k)\right) \mod N$ dans lequel $N = \prod_{i=1}^{K} M_i$ , $c_k = A_k * A_k'$ , $A_k = \dfrac{N}{M_k}$ , et $A_k'$ est un nombre entier minimum positif qui satisfait

$A_k * A_k' \mod M_k = 1$ , pour acquérir une valeur codée conjointe $r_k$ des K types d'attributions de ressources ;

dans lequel une attribution de ressources soutenue par le type k possède $M_k$ modes d'attribution possibles, une attribution de ressources soutenue par le type i possède $M_i$ modes d'attribution possibles, rk désigne des informations d'indication de ressources obtenues par un codage conjoint des valeurs d'indication de ressources correspondant aux K types d'attributions de ressources, et $RIV_k$ correspond à l'une des valeurs d'indication de ressources correspondant respectivement aux $M_k$ modes d'attribution, dans lequel $RIV_k = 0,1...,M_k-1$, qui est un nombre décimal.

6. Appareil de réception d'attribution de ressources, comprenant un second module de traitement et un module de décodage, dans lequel
le second module de traitement est configuré pour acquérir une valeur codée conjointe décimale en fonction des informations d'indication de ressources reçues ; et
le module de décodage est configuré pour acquérir, en fonction de la valeur codée conjointe décimale acquise, des valeurs d'indication de ressources correspondant aux attributions de ressources impliquées dans le codage conjoint, séparément ; **caractérisé en ce que**, dans lequel si une extrémité d'envoi d'attribution de ressources des informations d'indication de ressources reçues utilise une première manière prédéfinie pour calculer $r_K$ lorsque $r_{k-1} \leq M_k-1$

en cas de $\prod_{i=1}^{k-1} M_i \geq M_k$ et si l'extrémité d'envoi d'attribution de ressources des informations d'indication de ressources reçues utilise une troisième manière prédéfinie pour calculer $r_K$ lorsque $RIV_k \le \left( \prod_{i=1}^{k-1} M_i \right) - 1$ en cas de $\prod_{i=1}^{k-1} M_i < M_k$,

l'acquisition des valeurs d'indication de ressources $RIV_k$ correspondant aux K types d'attributions de ressources impliqués dans le codage conjoint comprend :

en cas de $\prod_{i=1}^{k-1} M_i \ge M_k$, l'établissement de $x_{k-1} = r_k \bmod \prod_{i=1}^{k-1} M_i$ si $x_{k-1} < M_k$, alors $RIV_k = x_{k-1}$ et

$r_{k-1} = \left\lfloor \dfrac{r_k}{\prod_{i=1}^{k-1} M_i} \right\rfloor$ sinon $r_{k-1} = x_{k-1}$ et $RIV_k = \left\lfloor \dfrac{r_k}{\prod_{i=1}^{k-1} M_i} \right\rfloor$ et ;

en cas de $\prod_{i=1}^{k-1} M_i < M_k$, l'établissement de $x_{k-1} = r_k \bmod M_k$,

si $x_{k-1} < \prod_{i=1}^{k-1} M_i$, alors $r_{k-1} = x_k - 1$ et $RIV_k = \left\lfloor \dfrac{r_k}{M_k} \right\rfloor$ sinon $RIV_k = x_{k-1}$;

et $r_{k-1} = \left\lfloor \dfrac{r_k}{M_k} \right\rfloor$ ;

dans lequel k = K, K-1, ..., 2 ; or

dans lequel si une extrémité d'envoi d'attribution de ressources des informations d'indication de ressources reçues utilise une deuxième manière prédéfinie pour calculer $r_K$ en cas de $\prod_{i=1}^{k-1} M_i \ge M_k$ et si l'extrémité d'envoi d'attribution de ressources des informations d'indication de ressources reçues utilise une quatrième manière prédéfinie pour calculer $r_K$ en cas de $\prod_{i=1}^{k-1} M_i < M_k$, l'acquisition des valeurs d'indication de ressources $RIV_K$ correspondant aux K types d'attributions de ressources impliqués dans le codage conjoint comprend :

en cas de $\prod_{i=1}^{k-1} M_i \ge M_k$, $r_{k-1} = r_k \bmod \prod_{i=1}^{k-1} M_i$, $RIV_k = \left\lfloor \dfrac{r_k}{\prod_{i=1}^{k-1} M_i} \right\rfloor$ dans lequel $RIV_1 = r_1$ ; et,

en cas de $\prod_{i=1}^{k-1} M_i < M_k$, $r_{k-1} = \left\lfloor \dfrac{r_k}{M_k} \right\rfloor$, $RIV_k = r_k \bmod M_k$, dans lequel $RIV_1 = r_1$ ; dans lequel k = K, K-1, ..., 2 ; ou

dans lequel si une extrémité d'envoi d'attribution de ressources des informations d'indication de ressources reçues utilise une cinquième manière prédéfinie pour acquérir une valeur codée conjointe $r_K$ des K types d'attributions de ressources,

l'acquisition des valeurs d'indication de ressources $RIV_k$ correspondant aux K types d'attributions de ressources impliqués dans le codage conjoint comprend :

le calcul séquentiel des valeurs d'indication de ressources $r_K$ des K types d'attributions de ressources en fonction de la valeur codée conjointe acquise $r_K$ et d'un paramètre de configuration de système $M_k$, dans lequel $RIV_k = r_k \bmod M_k$, lorsque k = 1, 2, ..., K, respectivement ;

dans lequel une attribution de ressources soutenue par le type k possède $M_k$ modes d'attribution possibles, où k = 2, 3, ..., K, une attribution de ressources soutenue par le type i possède Mi modes d'attribution possibles, rk désigne des informations d'indication de ressources obtenues par un codage conjoint des valeurs d'indication de ressources correspondant aux K types d'attributions de ressources.

100

A resource allocation sending end acquires resource indication values corresponding to two or more types of resource allocations separately

↓

101

The resource allocation sending end jointly codes the acquired resource indication values

↓

102

The resource allocation sending end sends resource indication information obtained through joint coding

**FIG. 1**

200

A resource allocation receiving end acquires a joint-coded value according to received resource indication information

↓

201

The resource allocation receiving end acquires, according to the acquired joint-coded value, resource indication values corresponding to resource allocations involved in joint coding separately

**FIG. 2**

$RIV_1$

$RIV_2$

Downlink bandwidth

$RIV_3$

$RIV_4$

Uplink bandwidth

**FIG. 3**

**FIG. 4**

**FIG. 5**

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013286992 A